# EUROPEAN PATENT APPLICATION

(11) **EP 4 794 340 A1**
(43) Date of publication of application: **19.08.2026**
(21) Application number: 24876347.6
(22) Date of filing: 14.09.2024
(51) Int. Cl.: H04N 21/431, H04N 21/44

(54) **MEDIA CONTENT GENERATION METHOD AND APPARATUS, AND ELECTRONIC DEVICE AND READABLE STORAGE MEDIUM**

(30) Priority: 13.10.2023 CN 202311329274
(71) Applicant: Beijing Zitiao Network Technology Co., Ltd., Beijing 100190 (CN)
(72) Inventor: CHEN, Fangfang, Beijing 100028 (CN); SONG, Xin, Beijing 100028 (CN)
(74) Representative: Marks & Clerk LLP
(86) International application number: PCT/CN2024/118997
(87) International publication number: WO 2025/077527

(57) **Abstract**

The embodiments of the present disclosure relate to the technical field of electronic devices. Provided are a media content generation method and apparatus, and an electronic device and a readable storage medium. The media content generation method comprises: receiving a first trigger operation on first media content displayed on a media playing interface; in response to the first trigger operation, displaying a media generation interface; acquiring a first media resource, and displaying the first media resource on the media generation interface, wherein the first media resource is an image resource of at least one preset target object that is extracted from the first media content; in response to receiving a second trigger operation on the media generation interface, acquiring a second media resource; and displaying second media content on the media generation interface, wherein the second media content is media content that is obtained by synthesizing the first media resource as the foreground and the second media resource.

## Description

The present application claims the priority to Chinese Patent Application No. 202311329274.0, filed on October 13, 2023, the entire disclosure of which is incorporated herein by reference as part of the present application.

### TECHNICAL FIELD

Embodiments of the present disclosure relate to a media content generation method and apparatus, an electronic device and a readable storage medium.

### BACKGROUND

With the development of Internet technologies, users have demands to create media content by their own and uploading the media content to a network platform for sharing.

### SUMMARY

The embodiments of the present disclosure aim to provide a media content generation method and apparatus, an electronic device and a readable storage medium.

In a first aspect, an embodiment of the present disclosure provides a media content generation method, which includes: receiving a first trigger operation on first media content displayed in a media playback interface; displaying a media generation interface in response to the first trigger operation; acquiring a first media resource, and displaying the first media resource in the media generation interface, where the first media resource is a visual resource of at least one preset target object that is extracted from the first media content; acquiring a second media resource in response to receiving a second trigger operation on the media generation interface; and displaying second media content in the media generation interface, where the second media content is media content that is obtained by synthesizing the first media resource as a foreground with the second media resource.

In a second aspect, an embodiment of the present disclosure provides a media content generation apparatus, which includes: a receiving module, configured to receive a first trigger operation on first media content displayed in a media playback interface; a display module, configured to display a media generation interface in response to the first trigger operation; and an acquisition module, configured to: acquire a first media resource, and display the first media resource in the media generation interface, where the first media resource is a visual resource of at least one preset target object that is extracted from the first media content, where the acquisition module is configured to acquire a second media resource in response to receiving a second trigger operation on the media generation interface; and the display module is configured to display second media content in the media generation interface, where the second media content is media content that is obtained by synthesizing the first media resource as a foreground with the second media resource.

In a third aspect, an embodiment of the present disclosure provides an electronic device, which includes: a processor, a memory, and a program or an instruction that is stored on the memory and that is executable on the processor, where the program or the instruction, when executed by the processor, causes the steps of the method according to the first aspect to be implemented.

In a fourth aspect, an embodiment of the present disclosure provides a readable storage medium, having a program or an instruction stored thereon, where the program or the instruction, when executed by a processor, causes the steps of the media content generation method according to the first aspect to be implemented.

In a fifth aspect, an embodiment of the present disclosure provides a chip, including a processor and a communication interface, where the communication interface is coupled with the processor, and the processor is configured to execute a program or an instruction to implement the steps of the media content generation method according to the first aspect.

In a sixth aspect, an embodiment of the present disclosure provides a computer program product, where the program product is stored in a storage medium; and the program product, when executed by at least one processor, causes the media content generation method according to the first aspect to be implemented.

### BRIEF DESCRIPTION OF DRAWINGS

Fig. 1 shows a schematic flowchart of a media content generation method according to an embodiment of the present disclosure;
Fig. 2 shows a first schematic diagram of a media playback interface and a media generation interface provided in some embodiments of the present disclosure;
Fig. 3 shows a first schematic diagram of a media generation interface provided in some embodiments of the present disclosure;
Fig. 4 shows a second schematic diagram of a media playback interface and a media generation interface provided in some embodiments of the present disclosure;
Fig. 5 shows a third schematic diagram of a media playback interface and a media generation interface provided in some embodiments of the present disclosure;
Fig. 6 shows a second schematic diagram of a media generation interface provided in some embodiments of the present disclosure;
Fig. 7 shows a schematic diagram of a media playback interface and a media presentation interface provided in some embodiments of the present disclosure;
Fig. 8 shows a schematic diagram of a media playback interface and a function panel interface provided in some embodiments of the present disclosure;
Fig. 9 is a structural block diagram of a media content generation apparatus provided in an embodiment of the present disclosure;
Fig. 10 is a structural block diagram of an electronic device provided in some embodiments of the present disclosure; and
Fig. 11 is a schematic structural diagram of hardware of an electronic device provided in some embodiments of the present disclosure.

### DETAILED DESCRIPTION

The technical solutions in the embodiments of the present disclosure are clearly described below with reference to the accompanying drawings of the embodiments of the present disclosure. Apparently, the embodiments described are merely some embodiments of the present disclosure rather than all the embodiments. All other embodiments obtained by persons skilled in the art based on the embodiments of the present disclosure fall within the protection scope of the present disclosure.

The terms "first", "second", etc. in this specification and claims of the present disclosure are defined to distinguish similar objects, and do not have to be used to describe a specific order or sequence. It is understood that terms used like this is interchangeable where appropriate, so that the embodiments of the present disclosure can be implemented in an order other than those illustrated or described here. Furthermore, objects distinguished by "first", "second", and the like are usually of the same class and do not limit the number of objects. For example, the first object can be one or multiple. In addition, "and/or" used in this specification and the claims represents at least one of the connected objects. Symbol "/" usually represents an "or" relationship between front and back associated objects.

In the related technologies, when a user performs duet creation based on existing media content, the user needs to manually process the existing media content and new media content after the new media content is uploaded or captured. As a result, a manner in which the user produces duet media content is cumbersome.

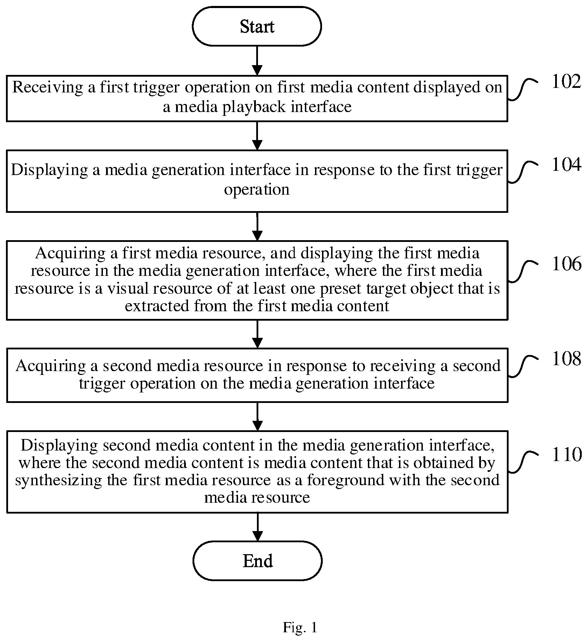

A media content generation method, a media content generation apparatus, an electronic device, and a readable storage medium that are provided by the embodiments of the present disclosure are described in detail below through specific embodiments and application scenarios of the embodiments with reference to Fig. 1 to Fig. 11.

An embodiment of the present disclosure provides a media content generation method. Fig. 1 shows a schematic flowchart of a media content generation method provided in an embodiment of the present disclosure. As shown in Fig. 1, the media content generation method includes the following steps.

Step 102: receiving a first trigger operation on first media content displayed on a media playback interface.

In this embodiment of the present disclosure, the media playback interface is use to display media content of a media stream that is transmitted by a server to an electronic device, and the first media content is media content currently displayed in the media playback interface.

As an example, the first media content may be any one of video content, dynamic image content, and static image content.

In this embodiment of the present disclosure, the first trigger operation is an operation input on the first media content. The first trigger operation may be a single operation or may be a combination of a plurality of operations.

Step 104: displaying a media generation interface in response to the first trigger operation.

In this embodiment of the present disclosure, the first trigger operation is used to trigger displaying of the media generation interface. The media generation interface is used for a user to create new media content.

Step 106: acquiring a first media resource, and displaying the first media resource in the media generation interface, where the first media resource is a visual resource of at least one preset target object that is extracted from the first media content.

In this embodiment of the present disclosure, the first media resource is the visual resource extracted from the first media content, and the first media resource corresponds to the at least one preset target object in the first media content. By recognizing the preset target object in the first media content, a visual resource corresponding to the preset target object is extracted, so that the first media resource includes the corresponding preset target object.

As an example, automatic matting is performed on the first media content based on an image recognition algorithm to obtain a corresponding first media resource. The first media resource obtained by the matting may be any one of a video resource, a static image resource, and a dynamic image resource.

Step 108: acquiring a second media resource in response to receiving a second trigger operation on the media generation interface.

In this embodiment of the present disclosure, the second trigger operation is used to acquire the second media resource. The second media resource may be media content uploaded or captured by a user.

As an example, the second media resource may be at least one of a video resource, a dynamic image resource, a static image resource, or a text resource.

Step 110: displaying second media content in the media generation interface, where the second media content is media content that is obtained by synthesizing the first media resource as a foreground with the second media resource.

In this embodiment of the present disclosure, the second media content is the media content that is obtained by synthesizing the first media resource with the second media resource. The first media resource is displayed in a foreground of the second media content, and the second media resource is displayed in a background of the second media content.

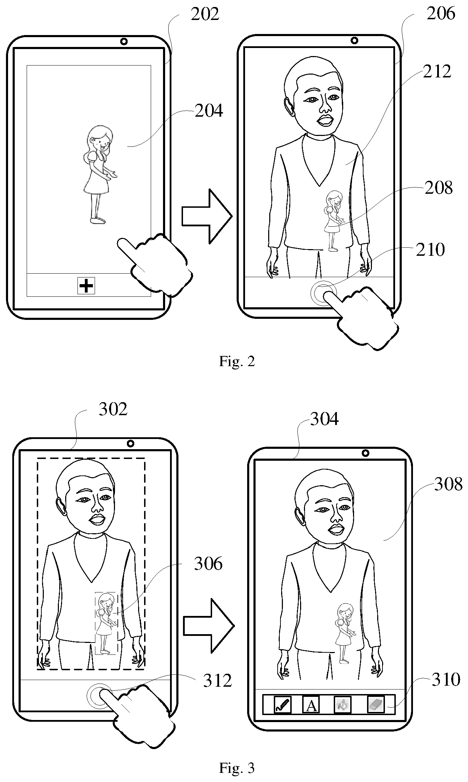

Fig. 2 shows a first schematic diagram of a media playback interface and a media generation interface that are provided in some embodiments of the present disclosure. As shown in Fig. 2, when a first video 204 is displayed in a media playback interface 202, after a user triggers a challenge operation on the first video 204, a media generation interface 206 is jumped to and displayed, and a second video 208 obtained by performing matting on the first video 204 is displayed in the media generation interface 206. In the media generation interface 206, the user taps a capture button 210 to record a third video 212, and a fourth video that is created is displayed in the media generation interface 206. The fourth video is a video obtained by synthesizing the second video 208 with the third video 212. The first video 204 is the first media content, the second video 208 is the first media resource, the third video 212 is the second media resource, and the fourth video is the second media content. Touching and holding the first video 204 is the first trigger operation, and tapping the capture button 210 is the second trigger operation.

It should be noted that the first trigger operation may also be a trigger operation that includes a plurality of operation inputs. For example: a duet control is displayed after the first video is tapped on, the user taps the duet control to trigger displaying of the media generation interface, and the first media resource extracted from the first media content is displayed in the media generation interface. It can be understood that when the media content generation interface is displayed, a matting duet mode may be entered by default, or a complete duet mode for direct duet of a complete view of the first media content and a video currently captured by the user may be entered. It is supported for the user to switch from the complete duet mode to the matting duet mode through a mode switching operation. It should be noted that the mode switching operation may also be included in the first trigger operation.

In this embodiment of the present disclosure, by the user performing the first trigger operation on the displayed first media content in the media playback interface, the first media resource can be easily extracted from the first media content and the first media resource is displayed in the media generation interface, so that operation steps required for the user to extract the first media resource are simplified. The user then uploads or captures the second media resource through the second trigger operation. By using both the first media resource extracted from the first media content and the second media resource uploaded or captured by the user as materials for producing the second media content and synthesizing the first media resource with the second media resource, the user can perform duet creation with a preset target object in the first media content when creating new second media content. This meets a requirement of the user for easily performing duet creation with existing media content and improves convenience of user operations. Furthermore, displaying the extracted first media resource in a foreground of the second media content further enhances an effect of the second media content created by the user.

In some embodiments of the present disclosure, acquiring the second media resource in response to receiving the second trigger operation on the media generation interface includes:
receiving the second trigger operation on a first control in the media generation interface, and capturing the second media resource.

In this embodiment of the present disclosure, the first control is an operation control displayed in the media generation interface and is used to capture a media resource. A user can capture to obtain the second media resource by performing the second trigger operation on the first control.

As shown in Fig. 2, the extracted first media resource is displayed in the media generation interface 206, and the capture button 210 is further displayed in the media generation interface 206. The user starts to capture the second media resource after tapping the capture button 210.

In this embodiment of the present disclosure, the user can trigger the capturing of the second media resource by performing the second trigger operation on the first control that triggers the capturing, in the media generation interface. The user can complete the capturing of the second media resource while viewing the first media resource in the media generation interface, so that the user can capture the second media resource while viewing the first media resource. This further improves convenience of user creation.

In some embodiments of the present disclosure, displaying the second media content on the media generation interface includes:
displaying a captured view and the first media resource in the media generation interface;
generating the second media content based on the first media resource and the second media resource in response to the completion of capturing the second media resource; and
displaying the second media content in the media generation interface.

In this embodiment of the present disclosure, the captured view is a view during the capturing of the second media resource. In the process of capturing the second media resource by the user through the second trigger operation, the first media resource and the captured view are displayed in one screen in the media generation interface, to enable the user to synchronously view the captured view and the first media resource in the media generation interface.

It should be noted that the media generation interface includes a capturing interface and an editing interface. In the process of triggering the capturing of the second media content by the user, the captured view in the process of capturing the second media resource is displayed on the capturing interface. In this case, the first media resource is displayed in the captured view. After the capturing of the second media content is completed, an editing interface is jumped to and displayed. In the editing interface, the first media resource is displayed in a foreground of the captured view, and a plurality of editing controls are displayed in the editing interface. The captured view and the first media resource can be edited through the editing controls.

Fig. 3 shows a first schematic diagram of a media generation interface provided in some embodiments of the present disclosure. As shown in Fig. 3, the media generation interface includes a capturing interface 302 and an editing interface 304. The first media resource is a first video 306. A capture button 312 is displayed in the capturing interface 302. The first video 306 is displayed in the capturing interface 302. After a user taps the capture button 312, the first video 306 is played along with a captured view in the capturing interface 302. The editing interface 304 is displayed after the capturing is completed. A captured second video 308 and an editing control 310 are displayed in the editing interface 304. The second video 308 includes the first video 306, and the first video 306 is displayed as a foreground image in the second video 308. The user can edit the second video 308 through the editing control 310, for example, adjusting the position of the first video 306 in the second video, and adding a filter, an effect, or the like to the second video 308. The second video 308 is the second media content. It can be understood that the first video 306 may also be adjusted before the user taps the capture button 312.

In this embodiment of the present disclosure, in the process of capturing the second media resource, the captured view and the first media resource are displayed in one screen in the media generation interface, so that the user can view the first media resource and the second media resource in one screen during and after the capturing, and the first media resource and the second media resource are automatically synthesized after the capturing of the second media resource is completed, to obtain the second media content. This further simplifies operation steps required by the user to perform a duet based on the first media content.

In some embodiments of the present disclosure, the first media resource is a first video resource, and the second media resource is a second video resource.

Displaying the captured view and the first media resource in the media generation interface includes:
synchronously presenting the first video resource and the captured view in the media generation interface; and
stopping capturing based on completion of playback of the first video resource, to obtain the second video resource.

In this embodiment of the present disclosure, the media generation interface includes a capturing interface. During the capturing of the second video resource, the captured view in the capturing process and the extracted first video resource are simultaneously presented. When the playback of the first video resource is completed, the current capturing is stopped, and the second video resource is obtained. The time axis of the captured second video resource matches the time axis of the first video resource, that is, the video length of the first video resource matches the video length of the second video resource.

It should be noted that the first video resource is in a playing-stopped state when displayed in the media generation interface, and the first video resource starts to be played at the beginning of capturing the second video resource. In this case, the user can browse the first video resource in a playing state, so that it is convenient for the user to capture the corresponding second video resource based on the first video resource that is being played. After the playback of the first video resource is completed, the current capturing procedure is automatically stopped, and the second video resource is obtained. It can be understood that the view of the first video resource may be superimposed on the view of the second video resource as a foreground, thereby generating the second media content.

In this embodiment of the present disclosure, the first video resource and the captured view can be simultaneously presented in the capturing interface, so that the user can simultaneously view the captured view and the first video resource in the process of capturing the second video resource. Therefore, the user can capture the second video resource with reference to the first video resource that is being played, and the capturing of the second video resource is automatically stopped after the playback of the first video resource is completed. This further improves synchronization between the captured second video resource and the first video resource.

In some embodiments of the present disclosure, after acquiring the first media resource, and displaying the first media resource in the media generation interface, the method includes: receiving a third trigger operation on the first media resource; and performing a first editing operation on the first media resource in response to the third trigger operation. The first editing operation includes at least one of: adjusting the display position of the first media resource on the media generation interface, adjusting the display size of the first media resource, adding a media effect, deleting the first media resource, or adjusting display duration of the first media resource.

In this embodiment of the present disclosure, the media generation interface includes an editing interface. The editing interface is displayed after the second media resource is captured. Both the first media resource and the second media resource are displayed in the editing interface.

In this embodiment of the present disclosure, the third trigger operation is used to perform a first editing operation on the first media resource. The third trigger operation may be a single operation input or an operation input obtained by combining a plurality of operation inputs.

In this embodiment of the present disclosure, the first editing operation includes adjusting the display position of the first media resource in the second media content. As an example, the first editing operation may be a drag operation. A user adjusts the position of the first media resource relative to the second media resource by dragging the display position of the first media resource in the editing interface, thereby updating the display position of the first media resource.

In this embodiment of the present disclosure, the first editing operation includes adjusting the display size of the first media resource in the second media content. As an example, the user can adjust the display size of the first media resource in the second media content by dragging the first media resource in two directions in a multi-finger operation manner.

In this embodiment of the present disclosure, an editing control is further displayed in the editing interface. By triggering the editing control, the user can add a media effect to the first media resource, delete the first media resource, and adjust the display duration of the first media resource in the second media content.

In this embodiment of the present disclosure, the media generation interface includes the editing interface. When the first media resource is displayed in the editing interface, the user can perform the first editing operation on the first media resource through the third trigger operation. In the process of completing the edition of the first media resource in the media generation interface, the user can correspondingly edit the first media resource before the second media content is generated.

In some embodiments of the present disclosure, the first media resource is a third video resource. After acquiring the first media resource, and displaying the first media resource in the media generation interface, the method includes:
receiving a fourth trigger operation on the third video resource; and
displaying a second control in response to the fourth trigger operation, where the second control is configured to perform a second editing operation on the third video resource.

The second editing operation includes at least one of: cropping the third video resource, adjusting the playback speed of the third video resource, deleting a video frame, or adding a video frame.

In this embodiment of the present disclosure, the media generation interface includes an editing interface. The second control is a video editing control. When the first media resource is the third video resource, the second control can be displayed in the editing interface, and a user edits the third video resource by performing a trigger operation on the second control.

In this embodiment of the present disclosure, when the extracted first media resource is a video-class media resource, the second control for editing a video is displayed in the editing interface, so that the user can perform corresponding video editing on the video-class media resource through the second control, instead of editing the video-class media resource in other applications. This simplifies operation steps required by the user to create duet media content.

In some embodiments of the present disclosure, acquiring the first media resource, and displaying the first media resource in the media generation interface includes:
displaying at least two third media resources in the media generation interface in response to a first input on a third control in the media playback interface, where the at least two third media resources are media resources that are extracted from the first media content;
determining at least one target media resource among the at least two third media resources in response to receiving a second input on the first media resource among the at least two third media resources; and
using the at least one target media resource as the first media resource, and displaying the first media resource in the media generation interface.

In this embodiment of the present disclosure, the first trigger operation includes a first input and a second input. The extraction of a plurality of third media resources corresponding to a plurality of different objects in the first media content is triggered through the first input, and the first media resource is selected from the plurality of third media resources through the second input.

The third control is configured to trigger automatic extraction of a third media resource from the first media content. Each third media resource corresponds to a preset target object. After a user performs the first input on the third control, the extracted plurality of third media resources are displayed in the media generation interface.

When at least two third media resources are displayed in the media generation interface, the user can perform the second input on the first media resource among the at least two third media resources, thereby selecting, from the plurality of third media resources, a first media resource that requires matting.

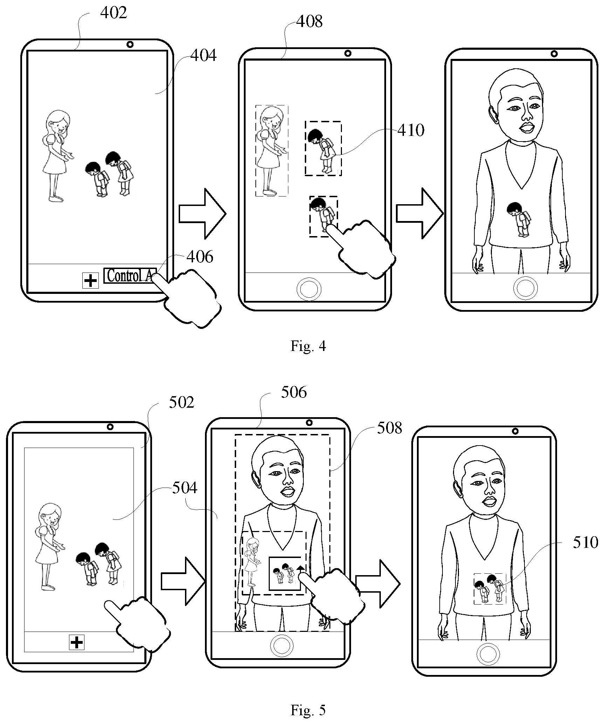

Fig. 4 shows a second schematic diagram of a media playback interface and a media generation interface provided in some embodiments of the present disclosure. As shown in Fig. 4, a first video 404 and a matting button 406 are displayed in a media playback interface 402. After a user taps the matting button 406, a media generation interface 408 is jumped to and displayed. The first video 404 includes three video characters, and three second videos 410 corresponding to the three video characters are displayed in the media generation interface 408. The user taps one of the three second videos 410 in the media generation interface 408 to be displayed as a first media resource in the media generation interface. The first video 404 is first media content. The second videos 410 are third media resources. The matting button 406 is the third control. That the user taps the matting button 406 is the first input. That the user taps one of the three second videos 410 as the first media resource is the second input.

It should be note that after at least two third media resources are extracted, the user can select a plurality of the third media resources among the at least two third media resources as first media resources through the second input.

As an example, when three third media resources corresponding to three different objects are extracted, the user can tap two of the third media resources as first media resources, so that generated second media content is obtained by performing a duet on a plurality of media resources in the first media content. The first media content is video content. The third media resources respectively correspond to video resources of different characters in the video content. Different third media resources in the first media content are extracted in an image recognition extraction manner.

In this embodiment of the present disclosure, the user performs the first input on the first media content displayed in the media playback interface, different third media resources corresponding to different preset target objects in the first media content can be automatically extracted, and the extracted third media resources are displayed in the media generation interface. The user selects the first media resource from the third media resources through the second input. The third media resources corresponding to different objects can be automatically extracted from the first media content and the user can select the first media resource from a plurality of third media resources. Therefore, operation steps by the user are reduced, and the user can select a corresponding first media resource for a duet according to actual needs.

In some embodiments of the present disclosure, acquiring the first media resource, and displaying the first media resource in the media generation interface includes:
displaying the first media content in the media generation interface in response to a third input on the first media content;
receiving a fourth input on the first media content;
determining the first media resource in the first media content based on an input parameter of the fourth input in response to the fourth input; and
displaying the first media resource in the media generation interface.

In this embodiment of the present disclosure, the first trigger operation includes a third input and a fourth input. The third input is used to display the complete first media content in the media generation interface, and the fourth input is used to select the first media resource from the first media content in the media generation interface.

As an example, the fourth input may be a swiping input on the first media content displayed in the media generation interface by the user. The input parameter is a swiping trajectory of the swiping input. First media content overlaid within the swiping trajectory is used as the first media resource.

Fig. 5 shows a third schematic diagram of a media playback interface and a media generation interface provided in some embodiments of the present disclosure. As shown in Fig. 5, a first video 504 is displayed in a media playback interface 502. A user touches and holds the first video 504, and a media generation interface 506 is jumped to and displayed. The first video 504 is displayed on the left hand side of the media generation interface 506, and a captured view 508 is displayed on the right hand side of the media generation interface 506. The user performs box selection on the first video 504 through the swiping input in the media generation interface 506. In this case, a target object selected from the first video 504 is automatically recognized, and a second video 510 corresponding to the target object is extracted as the first media resource. That the user touches and holds the first video 504 is the third input. The swiping input performed by the user on the first video 504 is the fourth input.

In this embodiment of the present disclosure, the user can display complete first media content in the media generation interface by performing the third input on the first media content displayed in the media playback interface, and select a first media resource from the first media content by performing the fourth input on the first media content in the media generation interface, so that the user can flexibly select a corresponding first media resource from the first media content displayed in the media generation interface. Flexibility of performing duet creation by the user based on the first media content is improved.

In some embodiments of the present disclosure, after displaying the media generation interface in response to the first trigger operation, the method further includes:
receiving a fifth trigger operation on a first indicator in the media generation interface;
displaying the first media content in the media generation interface in response to the fifth trigger operation;
acquiring a third media resource in response to a sixth trigger operation on the media generation interface; and
displaying third media content in the media generation interface, where the third media content is media content that is obtained by synthesizing the first media content with the third media resource in a tiling manner.

In this embodiment of the present disclosure, the first indicator is configured to trigger a switch of the manner of duet with the first media content. After a user performs the fourth tripper operation on the first indicator, the complete first media content is displayed in the media generation interface. In this case, the complete first media content is used as a duet material.

In this embodiment of the present disclosure, the sixth trigger operation is used to trigger the acquiring of the third media resource. The third media resource may be a media resource captured or uploaded by the user, and the third media resource.

As an example, the sixth trigger operation is an operation input performed on a capture control in the media generation interface. The third media resource is a captured media resource.

As an example, the sixth trigger operation is an operation input performed on an upload control in the media generation interface. The third media resource is the media resource uploaded by the user.

In this embodiment of the present disclosure, the first media content and the acquired third media resource are displayed in the media generation interface. The first media content and the third media resource are composited to acquire the third media content, and the first media content and the third media resource are displayed in a tiling manner in the third media content.

As an example, the first media content and the third media resource in the third media content are displayed in one screen and are distributed in left and right or at top and bottom.

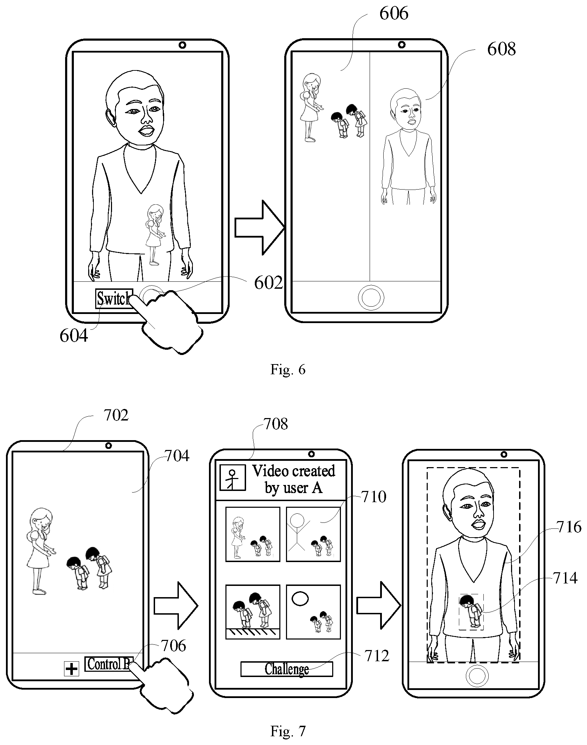

Fig. 6 shows a second schematic diagram of a media generation interface provided in some embodiments of the present disclosure. As shown in Fig. 6, a capture button 602 and a duet switching indicator 604 are displayed on the media generation interface, and a first media resource 606 in the media generation interface is displayed in the foreground of a captured view 608. A user taps the duet switching indicator 604 to display the first media resource 606 on the left hand side of the media generation interface and display the captured view 608 on the right hand side. The user taps the capture button 602 to trigger recording of a second video. In the resulting video obtained after the recording of the second video is completed, the first media resource 606 and the captured third media resource are distributed left and right. The duet switching indicator 604 is the first indicator. That the user taps the duet switching indicator 604 is the fourth trigger operation. That the user taps the capture button 602 is the sixth trigger operation. The second video is the third media resource, and the third video is the third media content.

In this embodiment of the present disclosure, the first indicator is displayed in the media generation interface. By performing the fourth trigger operation on the first indicator, the user can switch a duet manner of performing a duet based on first media content in the media generation interface, causing the entire first media content to be displayed as a duet material on the media generation interface. After the third media resource is captured or uploaded, the first media content and the third media resource are synthesized to obtain the third media content, so that the first media content and the third media resource are displayed in a tiling manner in the third media content.

In some embodiments of the present disclosure, displaying the media generation interface in response to the first trigger operation includes:
displaying a target interface in response to a fifth input on the media playback interface;
receiving a sixth input on the target interface; and
displaying the first media resource in the media generation interface in response to the sixth input.

In this embodiment of the present disclosure, the first trigger operation includes the fifth input and the sixth input. The fifth input is used to trigger displaying of the target interface. The sixth input is an operation input triggered by a user on the target interface. The step of displaying the first media resource in the media generation interface can be triggered through the sixth input.

As an example, the target interface may be a sub-interface of the media playback interface, for example: a function panel interface of the media playback interface.

As an example, the target interface may also be a media aggregation presentation interface. A plurality of pieces of media content associated with the first media content are displayed in the media aggregation presentation interface by jumping from the media playback interface to the media aggregation presentation interface. For example, a plurality of pieces of media content that include the first media resource are presented in the media aggregation presentation interface.

In this embodiment of the present disclosure, the target interface is jumped to and displayed by triggering the fifth input on the media playback interface. By performing the sixth input on the target interface, it can be easy to trigger subsequent steps of matting the first media content to obtain the first media resource and performing a duet based on the first media resource in the media generation interface. This further simplifies operation steps of the user.

In some embodiments of the present disclosure, the target interface includes a media presentation interface, the media presentation interface including at least one second indicator and a fourth control, where the second indicator is configured to indicate playback of corresponding fourth media content, the fourth media content including the first media resource, and the fourth control is configured to display the first media resource in the media generation interface in response to the sixth input.

In this embodiment of the present disclosure, the target interface includes the media presentation interface. The media presentation interface is an aggregation display interface for aggregation display of the at least one second indicator corresponding to the fourth media content that includes the first media resource, and the fourth control. Each second indicator corresponds to one piece of fourth media content. The second indicator may be a thumbnail or a cover image of the fourth media content. A user can trigger playback of the corresponding fourth media content in the media playback interface by tapping the second indicator.

It should be noted that when the first media content played in the media playback interface is a media content from secondary creation of another original media content, the displaying of the media presentation interface can be triggered by performing the fifth input on the media playback interface. Original media content and another media content from secondary creation of the original media content are displayed in the media presentation interface. The user can view the above original media content and another media content from the secondary creation in the media presentation interface.

Fig. 7 shows a schematic diagram of a media playback interface and a media presentation interface provided in some embodiments of the present disclosure. As shown in Fig. 7, a first video 704 and a jump button 706 of a presentation interface are displayed on a media playback interface 702. A user taps the jump button 706 to jump to and display a media presentation interface 708. Cover images 710 of a plurality of videos are displayed in the media presentation interface 708. The user can view corresponding videos by tapping the cover images 710. A challenge button 712 is also displayed in the media presentation interface. The user taps the challenge button 712 to trigger the displaying of the media generation interface. A second video 714 obtained by matting the first video 704, and a captured view 716 are displayed in the media generation interface. The first video 704 is the first media content. That the user taps the jump button 706 is the fifth input. The challenge button 712 is the fourth control. That the user taps the challenge button 712 is the sixth input.

In this embodiment of the present disclosure, the user can trigger, by performing the fifth input on the media playback interface, the displaying of the media presentation interface that aggregates a plurality of pieces of fourth media content including a first media resource, and then perform the sixth input on the fourth control in the media presentation interface, to trigger a subsequent step of performing a duet based on the extracted first media resource, so that the user can easily view the fourth media content matching the first media content and can also directly jump to the challenge from the media presentation interface. This further simplifies operation steps of the user.

In some embodiments of the present disclosure, the target interface includes a function panel interface, the function panel interface including at least one fifth control, where the fifth control is configured to display the first media resource in the media generation interface in response to the sixth input.

In this embodiment of the present disclosure, the function panel interface is a sub-interface of the media playback interface. Displaying of the function panel interface can be triggered by performing the fifth input on the media playback interface. The function panel interface includes the fifth control. Displaying of the first media resource on the media generation interface can be triggered by performing the sixth input on the fifth control.

As an example, the function panel interface further includes a function control such as a share control, a download control, or the like.

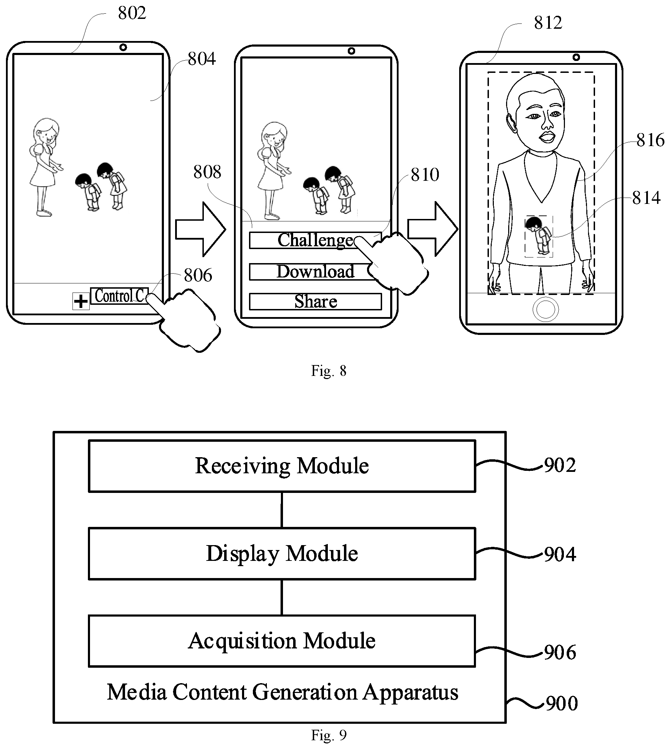

Fig. 8 shows a schematic diagram of a media playback interface and a function panel interface provided in some embodiments of the present disclosure. As shown in Fig. 8, a first video 804 and a wake-up button 806 of a function panel are displayed in the media playback interface 802. A user taps the wake-up button 806 to display a function panel interface 808 in the media playback interface 802. Function controls such as a challenge button 810, a download button, and a share button are displayed in the function panel interface 808. The user taps the challenge button 810 to trigger displaying of a media generation interface 812, and a second video 814 obtained by matting the first video 804, and a captured view 816 are displayed in the media generation interface. The first video 804 is the first media content. That the user taps the wake-up button 806 is the fifth input. The challenge button 810 is the fourth control. That the user taps the challenge button 810 is the sixth input.

In this embodiment of the present disclosure, the user can trigger, by performing the fifth input on the media playback interface, the displaying of the function panel interface, and then perform the sixth input on the fifth control in the function panel interface, to trigger a subsequent step of performing a duet based on the extracted first media resource, so that the user can jump to the challenge from the function panel interface. This further simplifies operation steps of the user.

In some embodiments of the present disclosure, the first media resource includes at least one of: a video resource, a dynamic image resource, or a static image resource.

In this embodiment of the present disclosure, when the first media content is video content, the extracted first media resource may be a video resource including at least a part of the video content, or may be a static image resource or a dynamic image resource that is a screenshot taken from the video content.

In this embodiment of the present disclosure, when the first media content is dynamic image content, the extracted first media resource may be a video resource obtained by converting at least a part of the dynamic image content, or may be a static image resource or a dynamic image resource that is a screenshot taken from the dynamic image content.

In this embodiment of the present disclosure, when the first media content is static image content, the extracted first media resource may be a static image resource that is a screenshot taken from the static image content. When the first media content includes a plurality of pieces of static image content, a video resource or a dynamic image resource may be obtained by synthesizing the plurality of pieces of static image content.

The execution entity of the media content generation method provided in the embodiments of the present disclosure may be a media content generation apparatus. The media content generation apparatus provided in the embodiments of the present disclosure is described in the embodiments of the present disclosure by using an example in which the media content generation apparatus performs the media content generation method.

A media content generation apparatus is provided in some embodiments of the present disclosure. Fig. 9 shows a structural block diagram of a media content generation apparatus provided in an embodiment of the present disclosure. As shown in Fig. 9, the media content generation apparatus 900 includes:
a receiving module 902, configured to receive a first trigger operation on first media content displayed in a media playback interface;
a display module 904, configured to display a media generation interface in response to the first trigger operation; and
an acquisition module 906, configured to: acquire a first media resource, and display the first media resource in the media generation interface, where the first media resource is a visual resource of at least one preset target object that is extracted from the first media content.

The acquisition module 906 is configured to acquire a second media resource in response to receiving a second trigger operation on the media generation interface.

The display module 904 is configured to display second media content on the media generation interface, where the second media content is media content that is obtained by synthesizing the first media resource as a foreground with the second media resource.

In this embodiment of the present disclosure, by the user performing the first trigger operation on the displayed first media content in the media playback interface, the first media resource can be easily extracted from the first media content and the first media resource is displayed in the media generation interface, so that operation steps required for the user to extract the first media resource are simplified. The user then uploads or captures the second media resource through the second trigger operation. By using both the first media resource extracted from the first media content and the second media resource uploaded or captured by the user as materials for producing the second media content and synthesizing the first media resource with the second media resource, the user can perform duet creation with a preset target object in the first media content when creating new second media content. This meets a requirement of the user for easily performing duet creation based with existing media content and improves convenience of user operations. Furthermore, displaying the extracted first media resource in a foreground of the second media content further enhances an effect of the second media content created by the user.

In some embodiments of the present disclosure, the receiving module 902 is configured to receive the second trigger operation on a first control on the media generation interface.

The media content generation apparatus 900 further includes: a capturing module, configured to capture the second media resource.

In this embodiment of the present disclosure, a user can trigger the capturing of the second media resource by performing the second trigger operation on the first control that triggers the capturing, in the media generation interface. The user can complete the capturing of the second media resource while viewing the first media resource in the media generation interface, so that the user can capture the second media resource while viewing the first media resource. This further improves convenience of user creation.

In some embodiments of the present disclosure, the display module 904 is configured to display a captured view and the first media resource in the media generation interface.

The media content generation apparatus 900 further includes: a generation module, configured to generate the second media content based on the first media resource and the second media resource in response to completion of capturing the second media resource.

The display module 904 is configured to display the second media content in the media generation interface.

In this embodiment of the present disclosure, in the process of capturing the second media resource, the captured view and the first media resource are displayed in one screen in the media generation interface, so that a user can view the first media resource and the second media resource in one screen during and after the capturing, and the first media resource and the second media resource are automatically synthesized after the capturing of the second media resource is completed, to obtain the second media content. This further simplifies operation steps required by the user to perform a duet based on the first media content.

In some embodiments of the present disclosure, the first media resource is a first video resource, and the second media resource is a second video resource.

The display module 904 is configured to synchronously present the first video resource and the captured view in a capturing interface.

The capturing module is configured to stop capturing based on completion of playback of the first video resource, to obtain the second video resource.

In this embodiment of the present disclosure, the first video resource and the captured view can be simultaneously presented in the capturing interface, so that the user can simultaneously view the captured view and the first video resource in the process of capturing the second video resource. The user can capture the second video resource with reference to the first video resource that is being played, and the capturing of the second video resource is automatically stopped after the playback of the first video resource is completed. This further improves synchronization between the captured second video resource and the first video resource.

In some embodiments of the present disclosure, the receiving module 902 is configured to receive a third trigger operation on the first media resource.

The media content generation apparatus 900 further includes:
an editing module, configured to perform a first editing operation on the first media resource in response to the third trigger operation.

The first editing operation includes at least one of: adjusting a display position of the first media resource, adjusting a display size of the first media resource, adding a media effect, deleting the first media resource, or adjusting display duration of the first media resource.

In this embodiment of the present disclosure, the media generation interface includes the editing interface. When the first media resource is displayed in the editing interface, the user can perform the first editing operation on the first media resource through the third trigger operation. In the process of completing the edition of the first media resource in the media generation interface, the user can correspondingly edit the first media resource before the second media content is generated.

In some embodiments of the present disclosure, the first media resource is a third video resource.

The receiving module 902 is configured to receive a fourth trigger operation on the third video resource.

The display module 904 is configured to display a second control in response to the fourth trigger operation, where the second control is configured to perform a second editing operation on the third video resource.

The second editing operation includes at least one of: cropping the third video resource, adjusting a playback speed of the third video resource, deleting a video frame, or adding a video frame.

In this embodiment of the present disclosure, when the extracted first media resource is a video-class media resource, the second control for editing a video is displayed in the editing interface, so that the user can perform corresponding video editing on the video-class media resource through the second control, instead of editing the video-class media resource in other applications. This simplifies operation steps required by the user to create duet media content.

In some embodiments of the present disclosure, the display module 904 is configured to display at least two third media resources in the media generation interface in response to a first input on a third control in the media playback interface, where the at least two third media resources are media resources that are extracted from the first media content.

The media content generation apparatus 900 further includes: a determining module, configured to determine at least one target media resource among the at least two third media resources in response to receiving a second input on the first media resource among the at least two third media resources.

The display module 904 is configured to: use the at least one target media resource as the first media resource, and display the first media resource in the media generation interface.

In this embodiment of the present disclosure, the user performs the first input on the first media content displayed in the media playback interface, different third media resources corresponding to different preset target objects in the first media content can be automatically extracted, and the extracted third media resources are displayed in the media generation interface. The user selects the first media resource from the third media resources through the second input. The third media resources corresponding to different objects can be automatically extracted from the first media content and the user can select the first media resource from a plurality of third media resources. Therefore, operation steps by the user are reduced, and the user can select a corresponding first media resource for a duet according to actual needs.

In some embodiments of the present disclosure, the display module 904 is configured to display the first media content in the media generation interface in response to a third input on the first media content.

The receiving module 902 is configured to receive a fourth input on the first media content.

The determining module is configured to determine the first media resource in the first media content based on an input parameter of the fourth input in response to the fourth input; and

The display module 904 is configured to display the first media resource in the media generation interface.

In this embodiment of the present disclosure, a user can display complete first media content in the media generation interface by performing the third input on the first media content displayed in the media playback interface, and select a first media resource from the first media content by performing the fourth input on the first media content in the media generation interface, so that the user can flexibly select a corresponding first media resource from the first media content displayed in the media generation interface. Flexibility of performing duet creation by the user based on the first media content is improved.

In some embodiments of the present disclosure, the receiving module 902 is configured to receive a fifth trigger operation on a first indicator in the media generation interface.

The display module 904 is configured to display the first media content in the media generation interface in response to the fifth trigger operation.

The acquisition module 906 is configured to acquire a third media resource in response to a sixth trigger operation on the media generation interface.

The display module 904 is configured to display third media content in the media generation interface, where the third media content is media content that is obtained by synthesizing the first media content with the third media resource in a tiling manner.

In this embodiment of the present disclosure, the first indicator is displayed on the media generation interface. By performing the fourth trigger operation on the first indicator, the user can switch a duet manner of performing a duet based on first media content in the media generation interface, causing the entire first media content to be displayed as a duet material on the media generation interface. After the third media resource is captured or uploaded, the first media content and the third media resource are synthesized to obtain the third media content, so that the first media content and the third media resource are displayed in a tiling manner in the third media content.

In some embodiments of the present disclosure, the display module 904 is configured to display a target interface in response to a fifth input on the media playback interface.

The receiving module 902 is configured to receive a sixth input on the target interface.

The display module 904 is configured to display the first media resource in the media generation interface in response to the sixth input.

In this embodiment of the present disclosure, the target interface is jumped to and displayed by triggering the fifth input on the media playback interface. By performing the sixth input on the target interface, it can be easy to trigger subsequent steps of matting the first media content to obtain the first media resource and performing a duet based on the first media resource in the media generation interface. This further simplifies operation steps of a user.

In some embodiments of the present disclosure, the target interface includes a media presentation interface, the media presentation interface including at least one second indicator and a fourth control, where the second indicator is configured to indicate playback of corresponding fourth media content, the fourth media content including the first media resource, and the fourth control is configured to display the first media resource in the media generation interface in response to the sixth input.

In this embodiment of the present disclosure, the user can trigger, by performing the fifth input on the media playback interface, the displaying of the media presentation interface that aggregates a plurality of pieces of fourth media content including a first media resource, and then perform the sixth input on the fourth control in the media presentation interface, to trigger a subsequent step of performing a duet based on the extracted first media resource, so that the user can easily view the fourth media content matching the first media content and can also directly jump to the challenge from the media presentation interface. This further simplifies operation steps of the user.

In some embodiments of the present disclosure, the target interface includes a function panel interface, the function panel interface including at least one fifth control, where the fifth control is configured to display the first media resource in the media generation interface in response to the sixth input.

In this embodiment of the present disclosure, a user can trigger, by performing the fifth input on the media playback interface, the displaying of the function panel interface, and then perform the sixth input on the fifth control in the function panel interface, to trigger a subsequent step of performing a duet based on the extracted first media resource, so that the user can jump to the challenge from the function panel interface. This further simplifies operation steps of the user.

In some embodiments of the present disclosure, the first media resource includes at least one of: a video resource, a dynamic image resource, or a static image resource.

In this embodiment of the present disclosure, when the first media content is video content, the extracted first media resource may be a video resource including at least a part of the video content, or may be a static image resource or a dynamic image resource that is a screenshot taken from the video content.

In this embodiment of the present disclosure, when the first media content is dynamic image content, the extracted first media resource may be a video resource obtained by converting at least a part of the dynamic image content, or may be a static image resource or a dynamic image resource that is a screenshot taken from the dynamic image content.

In this embodiment of the present disclosure, when the first media content is static image content, the extracted first media resource may be a static image resource that is a screenshot taken from the static image content. When the first media content includes a plurality of pieces of static image content, a video resource or a dynamic image resource may be obtained by synthesizing the plurality of pieces of static image content.

The media content generation apparatus in this embodiment of the present disclosure may be an electronic device or a component such as an integrated circuit or a chip in an electronic device. The electronic device may be a terminal or another device other than a terminal. As an example, the electronic device may be a mobile phone, a tablet computer, a notebook computer, a palm computer, an in-vehicle electronic device, a mobile Internet device (MID), an augmented reality (AR)/virtual reality (VR) device, a robot, a wearable device, an ultra-mobile personal computer (UMPC), a netbook, or a personal digital assistant (PDA); or may be a server, a network attached storage (NAS), a personal computer (PC), a television (TV), a teller machine, or a self-service machine, which are not specifically limited in the embodiments of the present disclosure.

The media content generation apparatus in the embodiments of the present disclosure may be an apparatus that has an operating system. The operating system may be an Android operating system, may be an iOS operating system, or may be another possible operating system. This embodiment of the present disclosure does not impose a limitation on this.

The media content generation apparatus provided in this embodiment of the present disclosure can implement the various processes implemented in the above method embodiment, details of which are omitted here for brevity.

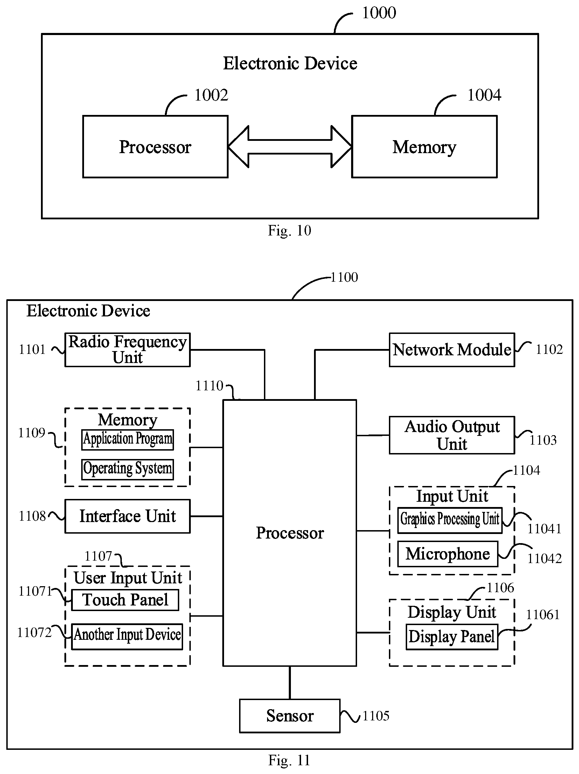

Optionally, an embodiment of the present disclosure further provides an electronic device. Fig. 10 shows a structural block diagram of an electronic device provided in some embodiments of the present disclosure. As shown in Fig. 10, the electronic device 1000 includes a processor 1002 and a memory 1004. The memory 1004 stores a program or an instruction executable on the processor 1002. The program or the instruction, when executed by the processor 1002, causes the steps of the above method embodiments to be implemented and can achieve the same technical effects, details of which are omitted here for brevity.

It should be noted that the electronic device in this embodiment of the present disclosure include the above mobile electronic device and a non-mobile electronic device.

Fig. 11 is a schematic structural diagram of hardware of an electronic device provided in some embodiments of the present disclosure.

The electronic device 1100 includes, but is not limited to: a radio frequency unit 1101, a network module 1102, an audio output unit 1103, an input unit 1104, a sensor 1105, a display unit 1106, a user input unit 1107, an interface unit 1108, a memory 1109, a processor 1110, and other components.

Those skilled in the art can understand that the electronic device 1100 further includes a power supply (such as a battery) for supplying power to the various components. The power supply may be logically connected to the processor 1110 by using a power management system, thereby implementing functions such as charging, discharging, and power consumption management by using the power management system. The structure of the electronic device shown in Fig. 11 constitutes no limitation on the electronic device, and the electronic device may include more or fewer components than those shown in the figure, or some components may be combined, or a different component deployment may be used, details of which are omitted here.

The user input unit 1107 is configured to receive a first trigger operation on first media content displayed in a media playback interface.

The display unit 1106 is configured to display a media generation interface in response to the first trigger operation.

The processor 1110 is configured to: acquire a first media resource, and display the first media resource in the media generation interface, where the first media resource is a visual resource of at least one preset target object that is extracted from the first media content.

The processor 1110 is configured to acquire a second media resource in response to receiving a second trigger operation on the media generation interface.

The display unit 1106 is configured to display second media content in the media generation interface, where the second media content is media content that is obtained by synthesizing the first media resource as a foreground with the second media resource.

In this embodiment of the present disclosure, by the user performing the first trigger operation on the displayed first media content in the media playback interface, the first media resource can be easily extracted from the first media content and the first media resource is displayed in the media generation interface, so that operation steps required for the user to extract the first media resource are simplified. The user then uploads or captures the second media resource through the second trigger operation. By using both the first media resource extracted from the first media content and the second media resource uploaded or captured by the user as materials for producing the second media content and synthesizing the first media resource with the second media resource, the user can perform duet creation with a preset target object in the first media content when creating new second media content. This meets a requirement of the user for easily performing duet creation with existing media content and improves convenience of user operations. Furthermore, displaying the extracted first media resource in a foreground of the second media content further enhances an effect of the second media content created by the user.

Further, the user input unit 1107 is configured to receive the second trigger operation on a first control in the media generation interface.

The sensor 1105 is configured to capture the second media resource.

In this embodiment of the present disclosure, a user can trigger the capturing of the second media resource by performing the second trigger operation on the first control that triggers the capturing, in the media generation interface. The user can complete the capturing of the second media resource while viewing the first media resource in the media generation interface, so that the user can capture the second media resource while viewing the first media resource. This further improves convenience of user creation.

Further, the display unit 1106 is configured to display a captured view and the first media resource in the media generation interface.

The processor 1110 is configured to generate the second media content based on the first media resource and the second media resource in response to completion of capturing the second media resource.

The display unit 1106 is configured to display the second media content in the media generation interface.

In this embodiment of the present disclosure, in the process of capturing the second media resource, the captured view and the first media resource are displayed in one screen in the media generation interface, so that a user can view the first media resource and the second media resource in one screen during and after the capturing, and the first media resource and the second media resource are automatically synthesized after the capturing of the second media resource is completed, to obtain the second media content. This further simplifies operation steps required by the user to perform a duet based on the first media content.

Further, the first media resource is a first video resource, and the second media resource is a second video resource.

The display unit 1106 is further configured to synchronously present the first video resource and the captured view in a capturing interface.

The sensor 1105 is configured to stop capturing based on completion of playback of the first video resource, to obtain the second video resource.

In this embodiment of the present disclosure, the first video resource and the captured view can be simultaneously presented in the capturing interface, so that the user can simultaneously view the captured view and the first video resource in the process of capturing the second video resource. The user can capture the second video resource with reference to the first video resource that is being played, and the capturing of the second video resource is automatically stopped after the playback of the first video resource is completed. This further improves synchronization between the captured second video resource and the first video resource.

Further, the user input unit 1107 is configured to receive a third trigger operation on the first media resource.

The processor 1110 is configured to perform a first editing operation on the first media resource in response to the third trigger operation.

The first editing operation includes at least one of: adjusting a display position of the first media resource, adjusting a display size of the first media resource, adding a media effect, deleting the first media resource, or adjusting display duration of the first media resource.

In this embodiment of the present disclosure, the media generation interface includes the editing interface. When the first media resource is displayed in the editing interface, the user can perform the first editing operation on the first media resource through the third trigger operation. In the process of completing the edition of the first media resource in the media generation interface, the user can correspondingly edit the first media resource before the second media content is generated.

Further, the first media resource is a third video resource.

The user input module 1107 is configured to receive a fourth trigger operation on the third video resource.

The display unit 1106 is configured to display a second control in response to the fourth trigger operation, where the second control is configured to perform a second editing operation on the third video resource.

The second editing operation includes at least one of: cropping the third video resource, adjusting a playback speed of the third video resource, deleting a video frame, or adding a video frame.

In this embodiment of the present disclosure, when the extracted first media resource is a video-class media resource, the second control for editing a video is displayed in the editing interface, so that the user can perform corresponding video editing on the video-class media resource through the second control, instead of editing the video-class media resource in other applications. This simplifies operation steps required by the user to create duet media content.

Further, the display unit 1106 is configured to display at least two third media resources in the media generation interface in response to a first input on a third control in the media playback interface, where the at least two third media resources are media resources that are extracted from the first media content.

The processor 1110 is configured to determine at least one target media resource among the at least two third media resources in response to receiving a second input on the first media resource among the at least two third media resources.

The display unit 1106 is configured to: use the at least one target media resource as the first media resource, and display the first media resource in the media generation interface.

In this embodiment of the present disclosure, the user performs the first input on the first media content displayed in the media playback interface, different third media resources corresponding to different preset target objects in the first media content can be automatically extracted, and the extracted third media resources are displayed in the media generation interface. The user selects the first media resource from the third media resources through the second input. The third media resources corresponding to different objects can be automatically extracted from the first media content and the user can select the first media resource from a plurality of third media resources. Therefore, operation steps by the user are reduced, and the user can select a corresponding first media resource for a duet according to actual needs.

Further, the display unit 1106 is configured to display the first media content in the media generation interface in response to a third input on the first media content.

The user input unit 1107 is configured to receive a fourth input on the first media content.

The processor 1110 is configured to determine the first media resource in the first media content based on an input parameter of the fourth input in response to the fourth input.

The display unit 1106 is configured to display the first media resource in the media generation interface.

In this embodiment of the present disclosure, a user can display complete first media content in the media generation interface by performing the third input on the first media content displayed in the media playback interface, and select a first media resource from the first media content by performing the fourth input on the first media content in the media generation interface, so that the user can flexibly select a corresponding first media resource from the first media content displayed in the media generation interface. Flexibility of performing duet creation by the user based on the first media content is improved.

Further, the user input unit 1107 is configured to receive a fifth trigger operation on a first indicator on the media generation interface.

The display unit 1106 is configured to display the first media content in the media generation interface in response to the fifth trigger operation.

The processor 1110 is configured to acquire a third media resource in response to a sixth trigger operation on the media generation interface.

The display unit 1106 is configured to display third media content in the media generation interface, where the third media content is media content that is obtained by synthesizing the first media content with the third media resource in a tiling manner.

In this embodiment of the present disclosure, the first indicator is displayed on the media generation interface. By performing the fourth trigger operation on the first indicator, the user can switch a duet manner of performing a duet based on first media content in the media generation interface, causing the entire first media content to be displayed as a duet material on the media generation interface. After the third media resource is captured or uploaded, the first media content and the third media resource are synthesized to obtain the third media content, so that the first media content and the third media resource are displayed in a tiling manner in the third media content.

Further, the display unit 1106 is configured to display a target interface in response to a fifth input on the media playback interface.

The user input unit 1107 is configured to receive a sixth input on the target interface; and

The display unit 1106 is configured to display the first media resource in the media generation interface in response to the sixth input.

In this embodiment of the present disclosure, the target interface is jumped to and displayed by triggering the fifth input on the media playback interface. By performing the sixth input on the target interface, it can be easy to trigger subsequent steps of matting the first media content to obtain the first media resource and performing a duet based on the first media resource in the media generation interface. This further simplifies operation steps of a user.

Further, the target interface includes a media presentation interface, the media presentation interface including at least one second indicator and a fourth control, where the second indicator is configured to indicate playback of corresponding fourth media content, the fourth media content including the first media resource, and the fourth control is configured to display the first media resource in the media generation interface in response to the sixth input.

In this embodiment of the present disclosure, the user can trigger, by performing the fifth input on the media playback interface, the displaying of the media presentation interface that aggregates a plurality of pieces of fourth media content including a first media resource, and then perform the sixth input on the fourth control in the media presentation interface, to trigger a subsequent step of performing a duet based on the extracted first media resource, so that the user can easily view the fourth media content matching the first media content and can also directly jump to the challenge from the media presentation interface. This further simplifies operation steps of the user.

Further, the target interface includes a function panel interface, the function panel interface including at least one fifth control, where the fifth control is configured to display the first media resource in the media generation interface in response to the sixth input.

In this embodiment of the present disclosure, a user can trigger, by performing the fifth input on the media playback interface, the displaying of the function panel interface, and then perform the sixth input on the fifth control in the function panel interface, to trigger a subsequent step of performing a duet based on the extracted first media resource, so that the user can jump to the challenge from the function panel interface. This further simplifies operation steps of the user.

Further, the first media resource includes at least one of: a video resource, a dynamic image resource, or a static image resource.

In this embodiment of the present disclosure, when the first media content is video content, the extracted first media resource may be a video resource including at least a part of the video content, or may be a static image resource or a dynamic image resource that is a screenshot taken from the video content.

In this embodiment of the present disclosure, when the first media content is dynamic image content, the extracted first media resource may be a video resource obtained by converting at least a part of the dynamic image content, or may be a static image resource or a dynamic image resource that is a screenshot taken from the dynamic image content.

In this embodiment of the present disclosure, when the first media content is static image content, the extracted first media resource may be a static image resource that is a screenshot taken from the static image content. When the first media content includes a plurality of pieces of static image content, a video resource or a dynamic image resource may be obtained by synthesizing the plurality of pieces of static image content.

It should be understood that in the embodiments of the present disclosure, the input unit 1104 may include a graphics processing unit (GPU) 11041 and a microphone 11042, and the GPU 11041 processes image data of static images or videos obtained by an image capturing apparatus (such as a camera) in a video capturing mode or an image capturing mode. The display unit 1106 may include a display panel 11061, and the display panel 11061 may be configured by using a liquid crystal display, an organic light-emitting diode, or the like. The user input unit 1107 includes at least one of a touch panel 11071 and another input device 11072. The touch panel 11071 is also referred to as a touchscreen. The touch panel 11071 may include two parts: a touch detection apparatus and a touch controller. Another input device 11072 may include, but is not limited to, a physical keyboard, a functional key (such as a volume control key or a switch key), a track ball, a mouse, and a joystick, which is not described herein in detail.

The memory 1109 may be configured to store a software program and various data. The memory 1109 may mainly include a first storage area for storing a program or instructions, and a second storage area for storing data. The first storage area may store an operating system, an application program or instructions required by at least one function (for example, a sound playing function and an image display function), and the like. In addition, the memory 1109 may include a volatile memory or a non-volatile memory, or may include both a volatile memory and a non-volatile memory. The non-volatile memory may be a read-only memory (ROM), a programmable read-only memory (PROM), an erasable programmable read-only memory (EPROM), an electrically erasable programmable read-only memory (EEPROM), or a flash memory. The volatile memory may be a random access memory (RAM), a static RAM (SRAM), a dynamic RAM (DRAM), a synchronous DRAM (SDRAM), a double data rate SDRAM (DDRSDRAM), an enhanced SDRAM (ESDRAM), a synch link DRAM (SLDRAM), and a direct Rambus RAM (DRRAM). The memory 1109 in the embodiments of the present disclosure includes, but is not limited to, these and any other suitable types of memories.

The processor 1110 may include one or more processing units. Optionally, the processor 1110 may integrate an application processor and a modem processor, where the application processor mainly processes operations involving an operating system, a user interface, an application program, and the like, and the modem processor mainly processes a wireless communication signal, such as a baseband processor. It can be understood that the above modem may not be integrated into the processor 1110.

An embodiment of the present disclosure further provide a readable storage medium, having a program or an instruction stored thereon. The program or the instruction, when executed by a processor, causes the processes of the above media content generation apparatus embodiments to be implemented and can achieve the same technical effects, details of which are omitted here for brevity.

The processor is the processor in the electronic device in the above embodiment. The readable storage medium includes a computer-readable storage medium, such as a computer read-only memory (ROM), a random access memory (RAM), a magnetic tape, a compact disc, or the like.

An embodiment of the present disclosure further provides a chip. The chip includes a processor and a communication interface. The communication interface is coupled to the processor. The processor is configured to execute a program or an instruction to implement the processes of the media content generation method embodiments and can achieve the same technical effects, details of which are omitted here for brevity.

It should be understood that the chip mentioned in the embodiments of the present disclosure may alternatively be referred to as a system-grade chip, a system chip, a chip system, a system-on-chip, or the like.

An embodiment of the present disclosure provides a computer program product. The program product is stored in a storage medium. The program product is executed by at least one processor to cause the processes of the above media content generation method embodiments to be implemented and can achieve the same technical effects, details of which are omitted here for brevity.

It should be noted that the terms "include", "comprise", or any other variants thereof herein are intended to cover a non-exclusive inclusion, such that a process, a method, an article, or an apparatus that includes a list of elements not only includes those elements, but also includes other elements that are not explicitly listed, or further includes elements that are inherent to such a process, method, article, or apparatus. In the absence of more restrictions, an element defined by "including/comprising a/an ..." does not exclude another same element in a process, method, article, or apparatus that includes the element. In addition, it should be noted that the scopes of the methods and apparatuses in the implementations of the present disclosure are not limited to executing functions in the order shown or discussed, but may alternatively include executing functions in a substantially simultaneous manner or in an opposite order according to the functions involved. For example, the methods described may be executed in a different order than that described, and various steps may alternatively be added, omitted, or combined. In addition, features described with reference to some examples may be combined in other examples.

According to the descriptions in the foregoing implementations, a person skilled in the art may clearly learn that the method according to the foregoing embodiment may be implemented by relying on software and an essential commodity hardware platform or by using hardware, but the former is a better implementation in most cases. Based on such an understanding, the technical solutions of the present disclosure can be embodied essentially in the form of a computer software product stored in a storage medium (such as a ROM/RAM, a magnetic tape, and an optical disc), including a plurality of instructions for enabling a terminal (which may be a mobile phone, a computer, a server, a network device, or the like) to perform the methods in the embodiments of the present disclosure.

The embodiments of the present disclosure have been described above with reference to the accompanying drawings. The present disclosure is not limited to the specific implementations described above, and the specific implementations described above are merely schematic and not limiting. A person of ordinary skill in the art may make many forms under the teaching of the present disclosure without departing from the spirit of the present disclosure and the protection scope of the claims, and these forms shall all fall within the protection of the present disclosure.

## Claims

1. A media content generation method, comprising:
receiving a first trigger operation on first media content displayed in a media playback interface;
displaying a media generation interface in response to the first trigger operation;
acquiring a first media resource, and displaying the first media resource in the media generation interface, wherein the first media resource is a visual resource of at least one preset target object that is extracted from the first media content;
acquiring a second media resource in response to receiving a second trigger operation on the media generation interface; and
displaying second media content in the media generation interface, wherein the second media content is media content that is obtained by synthesizing the first media resource as a foreground with the second media resource.

2. The media content generation method according to claim 1, wherein acquiring the second media resource in response to receiving the second trigger operation on the media generation interface comprises:
receiving the second trigger operation on a first control in the media generation interface, and capturing the second media resource.

3. The media content generation method according to claim 1 or 2, wherein displaying the second media content in the media generation interface comprises:
displaying a captured view and the first media resource in the media generation interface;
generating the second media content based on the first media resource and the second media resource in response to completion of capturing the second media resource; and
displaying the second media content in the media generation interface.

4. The media content generation method according to claim 3, wherein the first media resource is a first video resource, and the second media resource is a second video resource, and
displaying the captured view and the first media resource in the media generation interface comprises:
synchronously presenting the first video resource and the captured view in a capturing interface; and
stopping capturing based on completion of playback of the first video resource to obtain the second video resource.

5. The media content generation method according to any one of claims 1 to 4, wherein after acquiring the first media resource, and displaying the first media resource in the media generation interface, the method comprises:
receiving a third trigger operation on the first media resource; and
performing a first editing operation on the first media resource in response to the third trigger operation,
wherein the first editing operation comprises at least one of: adjusting a display position of the first media resource, adjusting a display size of the first media resource, adding a media effect, deleting the first media resource, or adjusting display duration of the first media resource.

6. The media content generation method according to any one of claims 1 to 4, wherein the first media resource is a third video resource; and
after acquiring the first media resource, and displaying the first media resource in the media generation interface, the method comprises:
receiving a fourth trigger operation on the third video resource; and
displaying a second control in response to the fourth trigger operation, wherein the second control is configured to perform a second editing operation on the third video resource,
wherein the second editing operation comprises at least one of: cropping the third video resource, adjusting a playback speed of the third video resource, deleting a video frame, or adding a video frame.

7. The media content generation method according to any one of claims 1 to 4, wherein acquiring the first media resource, and displaying the first media resource in the media generation interface comprises:
displaying at least two third media resources in the media generation interface in response to a first input on a third control in the media playback interface, wherein the at least two third media resources are media resources that are extracted from the first media content;
determining at least one target media resource among the at least two third media resources in response to receiving a second input on the first media resource among the at least two third media resources; and
using the at least one target media resource as the first media resource, and displaying the first media resource in the media generation interface.

8. The media content generation method according to any one of claims 1 to 7, wherein acquiring the first media resource, and displaying the first media resource in the media generation interface comprises:
displaying the first media content in the media generation interface in response to a third input on the first media content;
receiving a fourth input on the first media content;
determining the first media resource in the first media content based on an input parameter of the fourth input in response to the fourth input; and
displaying the first media resource in the media generation interface.

9. The media content generation method according to any one of claims 1 to 8, wherein after displaying the media generation interface in response to the first trigger operation, the method further comprises:
receiving a fifth trigger operation on a first indicator in the media generation interface;
displaying the first media content in the media generation interface in response to the fifth trigger operation;
acquiring a third media resource in response to a sixth trigger operation on the media generation interface; and
displaying third media content in the media generation interface, wherein the third media content is media content that is obtained by synthesizing the first media content with the third media resource in a tiling manner.

10. The media content generation method according to any one of claims 1 to 9, wherein displaying the media generation interface in response to the first trigger operation comprises:
displaying a target interface in response to a fifth input on the media playback interface;
receiving a sixth input on the target interface; and
displaying the first media resource in the media generation interface in response to the sixth input.

11. The media content generation method according to claim 10, wherein the target interface comprises a media presentation interface, the media presentation interface comprising at least one second indicator and a fourth control, wherein the second indicator is configured to indicate playback of corresponding fourth media content, the fourth media content comprising the first media resource, and the fourth control is configured to display the first media resource in the media generation interface in response to the sixth input.

12. The media content generation method according to claim 10 or 11, wherein the target interface comprises a function panel interface, the function panel interface comprising at least one fifth control, wherein the fifth control is configured to display the first media resource in the media generation interface in response to the sixth input.

13. The media content generation method according to any one of claims 1 to 12, wherein the first media resource comprises at least one of: a video resource, a dynamic image resource, or a static image resource.

14. A media content generation apparatus, comprising:
a receiving module configured to receive a first trigger operation in first media content displayed on a media playback interface;
a display module configured to display a media generation interface in response to the first trigger operation; and
an acquisition module configured to acquire a first media resource, and display the first media resource in the media generation interface, wherein the first media resource is a visual resource of at least one preset target object that is extracted from the first media content,
wherein the acquisition module is configured to acquire a second media resource in response to receiving a second trigger operation on the media generation interface; and
the display module is configured to display second media content in the media generation interface, wherein the second media content is media content that is obtained by synthesizing the first media resource as a foreground with the second media resource.

15. The media content generation apparatus according to claim 14, wherein the acquisition module is further configured to receive the second trigger operation on a first control in the media generation interface, and capture the second media resource.

16. The media content generation apparatus according to claim 14 or 15, wherein the display module is further configured to display a captured view and the first media resource in the media generation interface;
the media content generation apparatus further comprises a generation module, the generation module being configured to generate the second media content based on the first media resource and the second media resource in response to completion of capturing the second media resource; and
the display module is further configured to display the second media content in the media generation interface.

17. The media content generation apparatus according to claim 16, wherein the first media resource is a first video resource, and the second media resource is a second video resource;
the display module is further configured to synchronously present the first video resource and the captured view in a capturing interface; and
the media content generation apparatus further comprises a capturing module, the capturing module being configured to stop capturing based on completion of playback of the first video resource to obtain the second video resource.

18. The media content generation apparatus according to any one of claims 14 to 17, wherein the receiving module is configured to receive a third trigger operation on the first media resource; and
the media content generation apparatus further comprises an editing module, the editing module being configured to perform a first editing operation on the first media resource in response to the third trigger operation,
wherein the first editing operation comprises at least one of: adjusting a display position of the first media resource, adjusting a display size of the first media resource, adding a media effect, deleting the first media resource, or adjusting display duration of the first media resource.

19. An electronic device, comprising:
a processor and a memory, wherein the memory stores a program or an instruction executable on the processor; and the program or the instruction, upon being executed by the processor, causes steps of the media content generation method according to any one of claims 1 to 13 to be implemented.

20. A readable storage medium, having a program or an instruction stored thereon, wherein the program or the instruction, upon being executed by a processor, causes steps of the media content generation method according to any one of claims 1 to 13 to be implemented.
